# EUROPEAN PATENT APPLICATION

(11) **EP 4 201 628 A1**
(43) Date of publication of application: **28.06.2023**
(21) Application number: 21216864.5
(22) Date of filing: 22.12.2021
(51) Int. Cl.: B29B 11/16

(54) **METHOD FOR MANUFACTURING A PREFORM ELEMENT, METHOD FOR MANUFACTURING A ROTOR BLADE, PREFORM ELEMENT, ROTOR BLADE, WIND TURBINE AND MOLD**

(71) Applicant: Siemens Gamesa Renewable Energy A/S, 7330 Brande (DK)
(72) Inventor: van Oosterom, Samuel Robert, 9220 Aalborg (DK)
(74) Representative: SGRE-Association

(57) **Abstract**

Manufacture of a preform element (23) comprising providing a mold (7), preform building components (9), an adhesive agent, and a penetration arrangement (13) comprising a plurality of elongated protruding penetration elements (15), wherein at least one of the preform building components (9) is a textile component (10), arranging the preform building components (9) and the adhesive agent on the molding surface (8), wherein the textile component (10) and the adhesive agent are arranged at least sectionally in contact with each other, wherein the penetration elements (15) protrude into the textile component (10) for locally spacing the fibers, activating the adhesive agent, solidifying the activated adhesive agent, and separating the penetration arrangement (13) and the preform components (9) for forming the preform element (23) comprising channels (24) protruding from an outer surface (25) of the preform element (23) into the textile component (10) at the positions of the penetration elements (15) .

## Description

The invention relates to a method for manufacturing a preform element used in particular for manufacturing a rotor blade of a wind turbine. Furthermore, the invention relates to a method for manufacturing a wind turbine rotor blade as well as to a preform element, a wind turbine rotor blade, a wind turbine and a mold for manufacturing a preform element for a wind turbine rotor blade.

Wind turbine rotor blades are often fabricated by using liquid composite molding processes, in which a liquid thermoset or thermoplastic, often a resin, is impregnated through a fiber reinforcement material via a pressure differential. The pressure differential may be generated either through a positive pressure at the inlet of the infused material or a vacuum at the outlet which draws the liquid matrix material through the fiber reinforcement structure.

A higher pressure differential will result in faster flow, wherein the speed at which the liquid will flow through the fiber structure depends on the flow resistance of the structure, or on the permeability of the structure for the respective liquid. In vacuum assistant resin infusion manufacturing processes, the maximum pressure differential which is obtainable by the vacuum is limited to approximately 1 bar. For a further increase in flow speed, an increased permeability of the materials is required.

In vacuum assisted infusion of wind turbine rotor blades, generally, a combination of flow mesh and flow channels in the material stack used for forming the rotor blade is used to increase the flow rate, in particular through fibers reinforcement structures.

The structure of wind turbine rotor blades consists of a high number of layers of reinforcement structures at a root section of the rotor blade which decreases along the spanwise direction of the rotor blade towards the tip. Consequently, the root end of the blade has both a large share of the total volume of textile components that need to be infused with resin and the highest number of layers that the resin must flow through, for instance for reaching flow channels which are provided in the surface of a core material of the rotor blade structure.

As a result of this, the through-thickness permeability of the stacked components becomes one of the most influential factors on resin flow. However, different components from which the rotor blade can be assembled, may have different flow permeabilities. In particular, flow meshes, which may be arranged on a surface of a component stack, can have a high permeability. Also core elements that comprise a rigid material and that are arranged inside the stack may have flow channels providing a high permeability for the resin at least at their surfaces.

However, textile reinforcement components may have a permeability many orders of magnitude lower, in particular in a direction orthogonal to the fiber direction, or the fiber length, respectively. For instance, for non-crimp reinforcing fabrics, which may be used in high performance composite structures as required for wind turbine rotor blades, the permeability in the through-thickness direction, hence orthogonal to the direction of the fibers, is commonly between 10 to 100 times lower than the permeability in the in-plane direction.

Since the permeability of the textile structures have a significant impact on the total time required to cast the blade, any changes in the materials may significantly affect the process time required for the manufacturing of a wind turbine rotor blade. This also has an impact on the materials which can be utilized, wherein generally reinforcing textiles with smaller gaps between the fiber tows may result in better physical, mechanical and fatigue properties in the final laminate than by using textile structures having larger gaps. However, smaller gaps result in a lower permeability, in particular in the direction perpendicular to the fibers, and therefore in longer process times. Contrary, textiles with larger gaps between the tows may have a better permeability in the through-thickness direction, but may adversely affect the stability that can be obtained from these structures.

In particular in wind turbine rotor blade manufacturing, the high number of layers to be placed at the root end of the blade results in a material arrangement which takes a significant portion of the mold takt time. As a result of this, preform elements consisting of one or more different types of preform building components can be used. For instance, preform elements comprising a plurality of reinforcement textile components, which are adhered to each other prior to their arrangement in the mold used for the fabrication of the rotor blade, can be used. These preform elements can be manufactured separately and lifted into place in the rotor blade mold to reduce the mold takt time and to allow for higher production rates.

The invention is based on the objective problem to provide an improved preform element, which in particular improves the distribution of resin in a resin infusion-based manufacturing process using the preform element.

According to the invention, this problem is solved by a method as initially described comprising the steps of:
- Providing a mold with a molding surface, one or more preform building components, an adhesive agent, and a penetration arrangement comprising a plurality of elongated penetration elements protruding from a base structure and/or from the molding surface, wherein at least one of the preform building components is a textile component comprising a plurality of fibers,
- Arranging the preform building components and the adhesive agent on the molding surface, wherein the textile component and the adhesive agent are arranged at least sectionally in contact with each other, wherein the textile component and/or the penetration arrangement are arranged in such manner that the penetration elements protrude into the textile component locally spacing the fibers,
- Activating the adhesive agent for at least partly soften and/or liquefying the adhesive agent,
- Solidifying the activated adhesive agent, and
- Separating the penetration arrangement and the preform component for forming the preform element comprising channels protruding from an outer surface of the preform element into the textile component at the positions of the penetration elements.

The usage of the penetration arrangement allows to create channels in the preform elements to be fabricated. Due to the activation and the subsequent solidification of the adhesive agent while the penetration elements of the penetration arrangement are arranged in the textile component, channels remain in the preform element after separation of the preform component and the penetration arrangement. These channels protrude from at least one surface of the preform element into the preform element, wherein the direction of the channels is perpendicular or at least essentially perpendicular to the direction of the fibers in the textile component. Therefore, the channels created in the preform element may be used as flow paths for a resin applied in a resin infusion process using the preform element.

Due to the channels, the preform element shows advantageously an increased permeability in the direction orthogonal to the direction of the fibers. The possibility to locally create a plurality of channels in the preform element by the penetration elements allows for using a textile component with small gaps between the fibers, or the fiber tows, respectively, so that the structural stability of the textile components, or of the preform element manufactured therefore, is not affected. The comparatively small channels created by the penetration elements during the manufacturing of the preform element do not have a significant influence on the stability of the textile components, since in the areas in between, the fibers of the textile component are not spaced so that their overall mechanical behavior does not change significantly.

Advantageously, the usage of the penetration arrangement during the manufacturing of the preform element increases the through-thickness permeability of the preform element in the manufacturing of a wind turbine rotor blade. This significantly reduces the mold takt time in the manufacturing of the rotor blade and therefore also the costs associated with the manufacturing of the rotor blade. Furthermore, the usage of the preform element does not adversely affect the manufacturing of the rotor blade. In addition, the usage of textile components with smaller gaps between the fibers, or the fibers tows, respectively, and therefore better structural properties in the design of the wind turbine rotor blade becomes possible.

The preform element is manufactured using a mold with a molding surface, wherein the one or more preform building components are arranged on the molding surface. The molding surface is used to define a shape or a geometry of the preform element to be manufactured. The preform building components comprise at least one textile component comprising a plurality of fibers. It is possible that the preform element is fabricated from multiple textile components and/or from a combination of textile components and non-textile components like instance rigid core elements consisting of balsawood, a polymer, a solidified polymer foam or the like.

The adhesive agent is arranged at or within the at least one textile component. The adhesive agent, which may also be denominated as binder or tackifier, may be for instance granulated and distributed on the surface of the textile component. The adhesive agent may be for instance a thermoplastic, a thermoset polymer or an epoxy-based adhesive, which is in particular compatible with the desired resin that is used for the manufacturing of the wind turbine rotor blade, so that it does not negatively impact the mechanical properties of the laminate structure. It is possible that the solidified binder is dissolved at least partly in the resin or that the solidified binder remains unaffected by the infused resin.

In case of thermoplastic or heat-activatable adhesive agents, for instance thermoset binders, the binder is activated by heating it above the glass transition temperature, followed by the compaction or vacuum forming of the textile into the final preform geometry. Solidifying of the activated adhesive may occur in this case by cooling so that the adjacently arranged components are hold in space by the solidified adhesive agent.

Since during this step, a part of the volume between the fibers is obstructed by the penetration elements of the penetration arrangement, a solidification of the adhesive agent at these positions is not possible, so that after the solidification of the adhesive agent, the channels for enhancing the permeability of the preform element are created. The solidified adhesive agent prevents the fibers from relaxing and closing the channels created by the penetration elements after the manufacturing process of the preform element is completed and therefore after the penetration arrangement has been separated from the manufactured preform element. It is possible that the textile component and/or the further components used for manufacturing the preform element are compressed prior to the activation of the adhesive agent.

As an alternative to thermal activation of the adhesive agent, also radio waves, ultrasonic excitation or the like may be used for at least partly soften and/or liquifying the adhesive agent.

The combination of the usage of the activatable adhesive agent and the penetration arrangement has many advantages compared to other manufacturing methods. Compared to the usage of high permeability textiles, textile components with improved mechanical performance and better physical characteristics can be used. This allows for a component fabricated from the preform element to exhibit better fatigue characteristics, so that it is less prone to crack propagation. In addition, in particular high permeability textiles with large gaps between the fibers can cause an increase weight of a casted component due to the increased amount of resin remaining in the structures, wherein such an increased weight may adversely affect for instance a rotor blade for a wind turbine manufactured using the preform element causing a reduced performance of the rotor blade.

Compared to other attachment methods like stitching and/or tufting, the usage of the binder has the advantage that the risk of damaging the fibers of the textile component is minimized during the manufacture of the preform element, since no additional fiber has to be introduced in the fiber structure. In addition, the usage of the adhesive agent has the advantage that also non-textile components like rigid core components can be used for manufacturing the preform element. In addition, the usage of the adhesive agent is easily applicable to large scale preforms and requires no special machinery. Furthermore, the adhesive agent can be used independently of the shape of the preform element to be manufactured.

Preferably, the penetration arrangement comprises a plate-shaped base structure from which the penetration elements protrude, wherein the base structure is arranged on top of the textile component with the penetration elements protruding into the textile component and/or the penetration arrangement comprises a plurality of penetration elements protruding from the molding surface, wherein the textile component is arranged in direct contact with the molding surface. The penetration arrangement comprises of a plurality of penetration elements which protrude from a base structure and/or from the molding surface. Hence, for manufacturing the preform element, the one or more textile components may be arranged on the molding surface, wherein the plurality of penetration elements protrudes from the molding surface into the textile component arranged on the molding surface.

In addition or alternatively, the penetration arrangement may also comprise a plurality of penetration elements which protrude from a base structure, so that the penetration arrangement can be considered for instance as a nail plate with the plate being the base structure and the nails being the penetration elements. The base structure with the penetration elements may be arranged on top of the textile components with the penetration elements protruding through the textile components for locally spacing the fibers.

The base structure may be adapted for instance to the shape of the preform element to be fabricated and may have for instance a convex and/or concave shape. Preferably, the base structure is flexible, so that it may adapt to the shape of the preform element to be fabricated. The penetration elements may protrude perpendicularly or at least essentially perpendicular from the base structure so that a separation of the fibers in the textile component in through-thickness direction is possible also in case of a flexible base structure adapted or adaptable to the shape of the preform element to be manufactured. The base structure and the protruding elements can be fabricated from different materials, so that rather stiff and stable penetration elements can be used.

Also preform elements protruding from the molding surface may protrude in particular vertically or essentially vertically from the molding surface. In case of a shaped molding surface, for instance a convex or concave molding surface, the penetration elements may each protrude perpendicularly or essentially perpendicular from the molding surface to allow for overall penetrating a textile component arranged on the molding surface in the through-thickness direction for the separation of the fibers.

In a preferred embodiment, penetration elements comprising at least sectionally a circular, an elliptical, a triangular, a quadratic, a rectangular or a polygonal cross-sectional area are used. Depending on the shape of the cross-section of the penetration elements, the permeability characteristics of the preform element can be altered. Furthermore, the shape of the penetration elements may also be adapted to the fiber structure of the textile component.

Preferably, penetration elements with a protruding length between 2 mm and 15 mm and/or a diameter between 0.5 mm and 2 mm are used and/or at least partly retractable penetration elements are used. The protruding length refers to the length that the penetration elements protrude from the base structure, or from the molding surface, respectively. The channels created in the preform element can be microchannels if they are created using penetration elements with a diameter of 1 mm or below.

The penetration elements can have all the same length and/or diameter or penetration elements with different lengths and/or diameters can be used. In particular, by using penetration elements with different lengths, different thicknesses of the textile component, and/or of textile component layers of the preform element may be taken into account, so that thinner textile components and/or thinner textile layers can be in contact with shorter and/or thinner penetration elements, wherein longer and/or thicker penetration elements are used for spacing the fibers of thicker textile components, or textile layers, respectively.

It is possible that at least partly retractable penetration elements are used. For instance, penetration elements arranged at a molding surface may each be coupled with an individually controllable actuator to vary the length of the penetration element that protrudes from the molding surface. Also in case of a penetration element comprising penetration elements protruding from a base structure, penetration elements coupled with individual controllable actuators for length-adjustment can be used.

The usage of retractable penetration elements allows for adjusting the protruding length of the penetration elements so that for instance in a mold, different components with different composition of textile components or the like can be fabricated, wherein the protruding length of the penetration elements can be adapted according to the preform element to be manufactured.

Preferably, penetration elements comprising a tapered tip-section are used. The tip-section may be for instance pointy or rounded and facilitates the separation of the fibers during the arrangement of the textile component on the penetration element, or during the arrangement of the penetration element on the textile component, respectively. In particular penetration elements with a tapered tip-section may also be denoted as nails.

In a preferred embodiment, the penetration elements are distributed evenly on the base structure and/or on the molding surface and/or the base structure and/or the molding surface comprise at least two regions with different distributions and/or densities of penetration elements. The density may vary for instance between 0.1 and 10 penetration elements per cm², in particular between 1 and 5 penetration elements per cm².

By providing regions with different densities of penetration elements, the resin flow characteristics of different sections of the preform elements to be manufactured can individually be controlled and adapted to the use of the preform element in a further casting process.

Preferably, the arranged textile component is at least partly compressed, wherein the penetration elements extend completely within the compressed textile component, in particular through at least 50 % of the thickness of the compressed textile component. In case that the compressed textile component comprises a varying thickness, for instance penetration elements with different length may be used to obtain a constant or essentially constant ratio between the channel length and the thickness of the compressed textile component.

The penetration elements may protrude in particular through more than 50 % of the thickness of a compressed or uncompressed textile component, for instance 60 % or more, 70 % or more, 80 % or more, 90 % or more of the thickness of the textile component. Also a protrusion through the entire compressed or uncompressed textile component is possible to allow for maximum permeability.

Preferably, an adhesive agent activatable by heat, radio waves and/or ultrasonic excitation is used. The solidification of the activated adhesive agent may occur by removing the energy source which is used for the activation of the adhesive agent. In addition, also a cooling may be applied to reduce the time required for the solidification of the adhesive agent.

In a preferred embodiment, a heating means is used for activation of the adhesive agent, wherein the heating means is arranged adjacently to the penetration arrangement. The heating means may be arranged for instance on top of a base structure of the penetration arrangement or in direct contact with a backside of the mold opposing the molding surface. Advantageously, the penetration elements may be used to increase the heat distribution in the textile components. For instance, the penetration elements may be fabricated from a metal so that they have a better heat conductivity than the textile component. By the penetration elements protruding through the textile components, the heat distribution inside the textile component can be improved. Advantageously, the time required for a thermal activation of the adhesive agent may be reduced and/or an even activation of an adhesive agent arranged within the textile component may be obtained.

A method for manufacturing a rotor blade of a wind turbine according to the invention uses one or more preform elements manufactured by a method for manufacturing a preform element according to the invention.

Preferably, the preform element is arranged in a blade mold, wherein resin is infused into the preform element, wherein the resin is supplied to at least a portion of the at least one surface comprising the channels.

The resin may be applied for instance by a resin inlet which is brought into contact with at least a section of the surface of the preform element comprising the channels.

Preferably, at least one flow-enhancing layer is arranged on the at least one surface comprising the channels, wherein the resin is supplied to a portion of the flow-enhancing layer. The flow-enhancing layer enhances in particular the flow of the resin in a direction parallel to the surface of the preform component so that the distribution of the resin over the surface comprising the channels is improved.

The resin distributed over the surface comes into contact with the channels so that an increased flow-through of the resin in the thickness direction of the preform element can be obtained over the entire surface, or at least over a large portion of the surface, of the preform element.

All details and advantages described in relation with the method according to the invention for manufacturing a preform element apply correspondingly to the method according to the invention for fabricating a wind turbine rotor blade and vice versa.

A preform element according to the invention is manufactured using a method for manufacturing a preform element according to the invention.

In particular, the preform element according to the invention comprises channels protruding from an outer surface of the preform element into the textile component at the positions of the penetration elements, wherein the channels are formed by solidified adhesive agent.

A wind turbine rotor blade according to the invention is manufactured using a method for manufacturing a wind turbine rotor blade according to the invention.

In particular, the wind turbine rotor blade according to the invention comprises at least one preform element according to the invention, or was casted using at least one preform element according to the invention, respectively.

A mold according to the invention for manufacturing a preform element, in particular for manufacturing a wind turbine rotor blade, comprises a molding surface and a penetration arrangement, wherein the penetration arrangement comprises a plurality of elongated penetration elements protruding from the molding surface.

All details and advantages described in relation to the method according to the invention for manufacturing a preform element and the method according to the invention for manufacturing a wind turbine rotor blade apply correspondingly to the preform element, the wind turbine rotor blade according to the invention and the mold according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a wind turbine according to the invention comprising one or more wind turbine rotor blades according to an embodiment of the invention,
- Fig. 2,3: illustrations of process steps of a method for forming a preform element according to the invention,
- Fig. 4: a detailed view of a penetration arrangement used in the method for manufacturing the preform element,
- Fig. 5,6: further illustrations of process steps of the method for manufacturing a preform element,
- Fig. 7,8: details of penetration elements protruding into a textile component
- Fig. 9: a further illustration of a process steps of the method for manufacturing a preform element
- Fig. 10,11: illustrations of process steps of a method for manufacturing a wind turbine rotor blade according to the invention, and
- Fig. 12: a mold according to the invention for manufacturing a preform element for a wind turbine rotor blade.

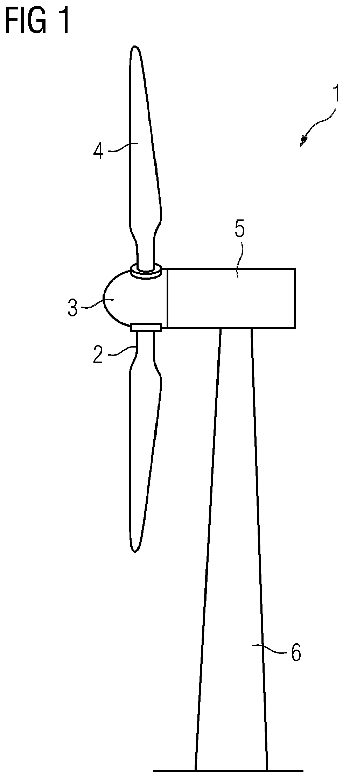

In fig. 1, a wind turbine 1 is shown. The wind turbine 1 comprises a rotor 2 with a hub 3 to which a plurality of rotor blades 4 is attached. The rotor 2 of the wind turbine 1 is attached to a nacelle 5 of the wind turbine 1, wherein the nacelle 5 is supported by a tower 6 of the wind turbine 1. Inside ethe nacelle 5, a plurality of components (not shown) used for the generation and/or conversion of electrical energy may be used. The wind turbine 1 is adapted to convert a rotational energy of the rotor 2 into electrical energy that may be fed for instance in a power grid.

The rotor blades 4 for the wind turbine 1 may be fabricated for instance using a resin transfer molding process, in which a resin is infused into a textile material. To obtain the shape of the rotor blade 4, the textile material is arranged as one or more layers in a mold for the fabrication of the rotor blade 4. To facilitate the arrangement of a plurality of components, in particular of different components that require a fixed arrangement with respect to each other, the so called preform elements may be used. A preform element comprises of one or more preform building components, wherein particularly at least one of the preform building components is a textile component comprising a plurality of fibers. A method for manufacturing such preform elements is described in relation to the following figures.

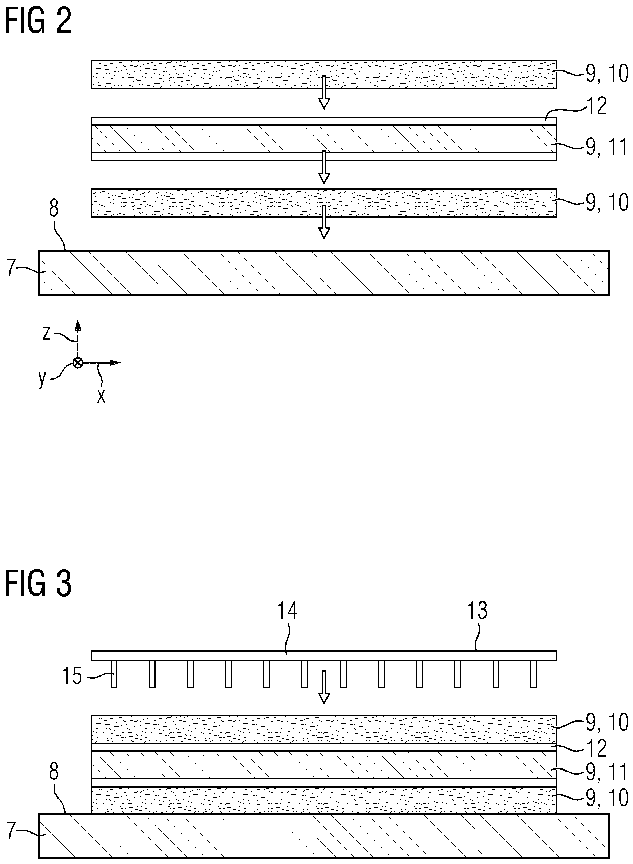

In fig. 2, a first process step of an embodiment of a method for manufacturing a preform element used for instance for manufacturing a rotor blade 4 of a wind turbine 1 is shown. First, a mold 7 with a molding surface 8 is provided. The molding surface 8 may be flat or it may comprise a convex, concave or any other shape in a length direction x and/or in a width direction y.

In addition to the mold 7, also a plurality of preform building components 9 is provided. For example, two of the preform building components 9 are textile components 10, wherein in between the textile components 10, a core component 11 is arranged.

The textile components 10 each comprise of a plurality of fibers which run in particular in a plane that is at least essentially parallel to the molding surface 8. The preform components 9 are stacked in a thickness direction of the textile components 10 denoted as z in fig. 2. The core component 11 consists of a rigid material, for instance balsa wood and/or a polymer, for instance a solidified polymer foam, or the like.

For forming a preform element, the preform building components 9 are adhered to each other using at least one adhesive agent. The adhesive agent is arranged in between the textile components 10 and the core component 11 and/or within the textile components 10. The adhesive agent may be for instance a powder binder, which is provided in forms of grains that are distributed in between the components 9 and/or provided as a part of the textile components 10, for instance by sintering the binder grains to the textile components 10. The adhesive agent allows for creating a bonding between the adjacently arranged components 9 and/or a bonding of the individual fibers, or fiber tows, of the textile components 10, respectively.

The preform element to be manufactured is designed for being used in a resin-infused casting process, in particular for fabrication of a rotor blade 4 of a wind turbine 1. To allow for a resin flow, for instance along the direction parallel to the molding surface 8, the core component 11 can comprise one or more resin flow channels 12, in particular in its surfaces arranged in contact with the textile components 10.

However, for reaching these resin flow channels 12, the resin has to pass through at least one of the textile components 10, wherein the resin must flow through the textile component 10 in the thickness direction, hence perpendicular to the fibers of the textile component 10. In particular, when textile components 10 with a comparatively low spacing between the fibers are used, the resin permeability in the thickness direction z can be small so that a comparably long process time is required for the resin to reach the flow channels 12 and/or to reach a uniform distribution of the resin within the stacked components 9. Therefore, the preform element fabricated from the components 9 is fabricated in such manner that a plurality of channels protruding from an outer surface of the preform element into at least one of the textile components 10 is manufactured to enhance its resin permeability in the through-thickness direction z, which is perpendicular to the orientation of the fibers in the textile components 10.

In fig. 3, the components 9 are shown arranged on top of each other on the molding surface 8. On top of the stacked components, a penetration arrangement 13 is arranged. The penetration arrangement 13 comprises a base structure 14 and a plurality of penetration elements 15 which protrude from the base structure 14, in particular orthogonally or essentially orthogonal.

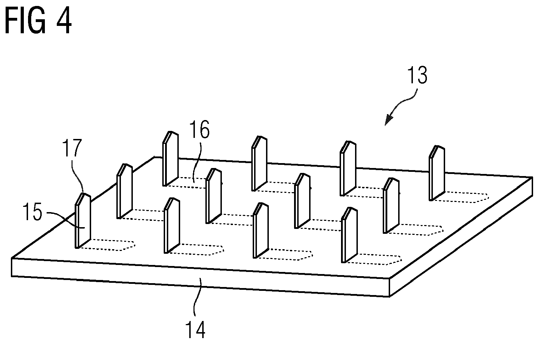

In fig. 4, a detailed view of the penetration arrangement 13 is shown. The penetration elements 15 may be fabricated for instance from metal. The base structure 14 may be for instance a metal sheet, from which the penetration elements 15 are created by punching and bending of partly punched penetration elements 15 so that they protrude from the base structure 14. In such a case, the base structure 14 may comprise a plurality of opening 16 resulting from the fabrication, hence the punch-off of the penetration elements 15.

Alternatively, the penetration elements 15 may be separately fixated to the base structure 14. The base structure 14 may alternatively be provided as the flexible plate, for instance a metal plate or a polymer plate, from which the penetration elements 15 protrude. The flexible base structure 14 may be adaptable to the shape of the preform element to be fabricated for instance when a convex or concave molding surface 8 is used.

The penetration elements 15 may comprise at least sectionally a circular, an elliptical, a triangular, a quadratic, a rectangular or a polygonal cross-sectional area. It is possible that the penetration elements 15 each comprise a tapered tip-section 17 to facilitate the penetration of the textile components 10. For instance, the penetration elements 15 may be provided as nails or as comparable structures attached to the base structure 14. The penetration elements 15 may have a protruding length from the base structure 14 between 2 mm and 15 mm, and/or a diameter between 0.5 mm and 2 mm.

The penetration elements 15 may be distributed evenly over the base structure 14 or there may be at least two regions with different distributions and/or densities of penetration elements 15. The penetration elements 15 may have all the same length and/or the same diameter or the lengths and/or the diameters of the penetration elements 15 may vary, for instance to account for different properties and/or a locally varying thickness of the textile component 9, which is brought into contact with the penetration arrangement 13.

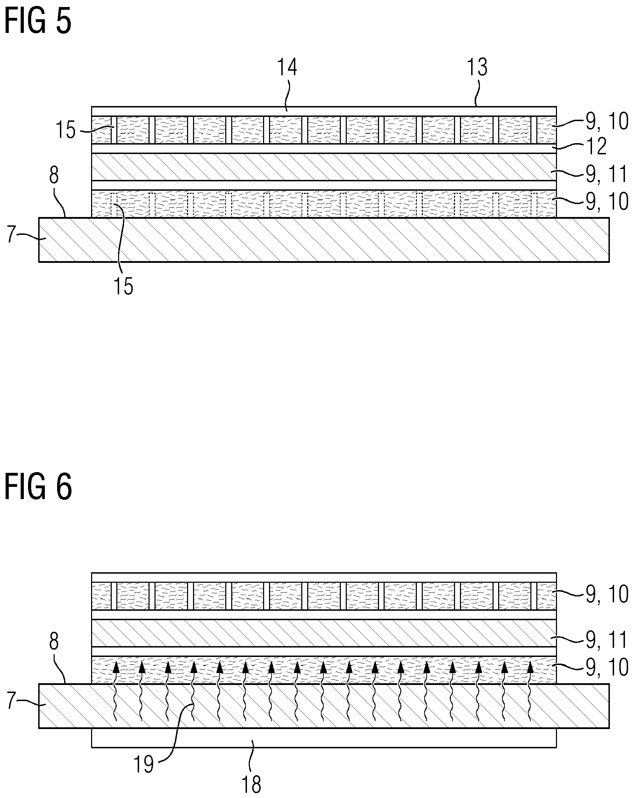

In fig. 5, the penetration element 13 is shown in its arranged position on top of the stack of components 9. The penetration elements 15 penetrate the topmost textile components 10 and separate the fibers at least locally around the penetration elements 15.

It is also possible that the penetration arrangement 13 comprises alternatively or in addition penetration elements 15 that protrude from the molding surface 8. The respective penetration elements 15 are shown in fig. 5 by dashed lines. These penetration elements 15 can be manufactured and/or arranged as described in relation to the penetration elements 15 protruding from the base structure 14.

The penetration elements 15 protruding from the molding surface 8 of the mold 7 penetrate the lower textile component 10 also for at least locally separating the fibers of the lower textile component 10. In this embodiment, the penetration elements 15 protrude entirely through each of the textile components 10. Alternatively, it is possible that penetration elements 15 with a reduced length are used so that only a portion of the textile component 10, in particular between 50 % and 100 % of the thickness of the textile component 10 are penetrated by the penetration elements 15.

Optionally, the components 9, in particular the textile components 10, can be compressed prior to and/or during the arrangement of the penetration arrangement 13, wherein the ratio between the length of the penetration elements 15 and the thickness of the textile component 10 refers to the compressed state of the textile components 10. The compression may occur for instance by applying a vacuum to the components 9, for instance by enclosing them in a vacuum bag (not shown), and/or by applying a pressure on the stack using other means.

In a next process step illustrated in Fig. 6, the adhesive agent arranged within the stack of components 9 is activated. In this embodiment, the adhesive agent is activated by applying heat, for instance from a heating means 18 of the mold 7 that allows for heating of the molding surface 8. The heating is symbolized by the arrows 19. In addition or alternatively, also other heating means may be used. For instance, an activation of the binder may also occur by heating the components 9, or the adhesive agent, respectively, in an oven, by applying heating blankets on top of the stack of components 9, by using radiative heat sources or the like.

The thermal activation of the adhesive agent causes the adhesive agent to at least partly soften and/or liquifying. The adhesive agent therefore distributes between the components 9 and/or the fibers of the textile components 10. Afterwards, the activated adhesive agent is solidified, for instance by switching off the heating means 18, so that no further heating of the components 9 occurs. In addition or alternatively, also an active cooling by applying a cooling means to the stack of components 9 is possible. The solidified adhesive agent consolidates the components 9. Furthermore, the solidified adhesive agent solidifies around the penetration elements 15 in the textile components 10.

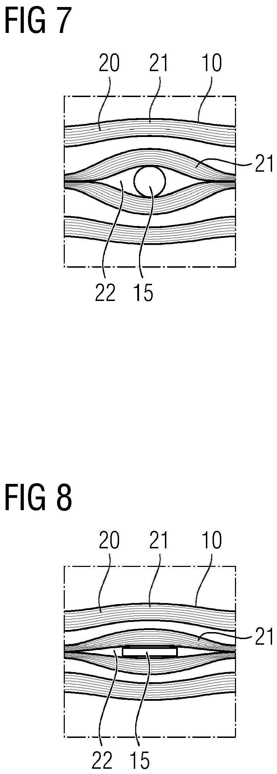

In fig. 7, a detailed view of one of the penetration elements 15 protruding into one of the textile components 10 is shown. The penetration element 15 locally separates the fibers 20 of the textile components 10. The fibers 20 are arranged in multiple fiber tows 21, wherein by the insertion of the penetration element 15 into the textile component 10 locally the fibers 10 of one tow 21 and/or two or more neighbouring tows 21 are locally separated.

By the separation of the fibers 20, a cavity 22 may be created around the penetration element 15, which may be filled at least partly by the adhesive agent during its activation. After solidifying the binder, and the removal of the penetration element 15 a channel will remain at least at the position of the penetration element 15 since the binder may only solidify within the fibers 20 and/or within the cavity 22, but not at the position of the penetration element 15, which is present during the solidification step of the adhesive agent.

In fig. 8, a second embodiment of a penetration element 15 protruding into a fiber tow 21 is shown. In this case, the penetration element 15 comprises a different aspect ratio, hence a rectangular cross-sectional area resulting in a different channel geometry obtained in the textile component 10.

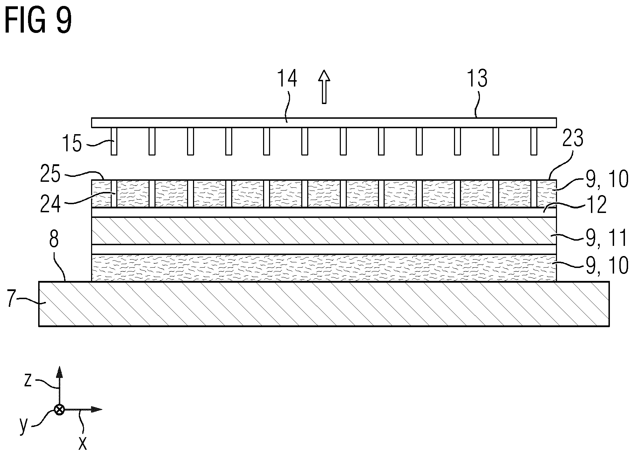

The preform element is finally created by separating the penetration arrangement 13 from the components 9, as it is depicted in fig. 9. After separating the penetration arrangement 13 from the stack of components 9 now forming the preform element 23, a plurality of channels 24 protruding from a surface 25 of the preform element towards its interior are created. The channels 24 are arranged at the locations of the penetration elements 15 and are at least partly surrounded by the solidified adhesive agent. In particular, the channels 24 can be created in such manner that they connect the surface 25 with the resin flow channel 12 of the rigid core component 11. For further processing, the preform element 23 may be transported for instance to another mold, in particular to a mold used for manufacturing a wind turbine rotor blade 4.

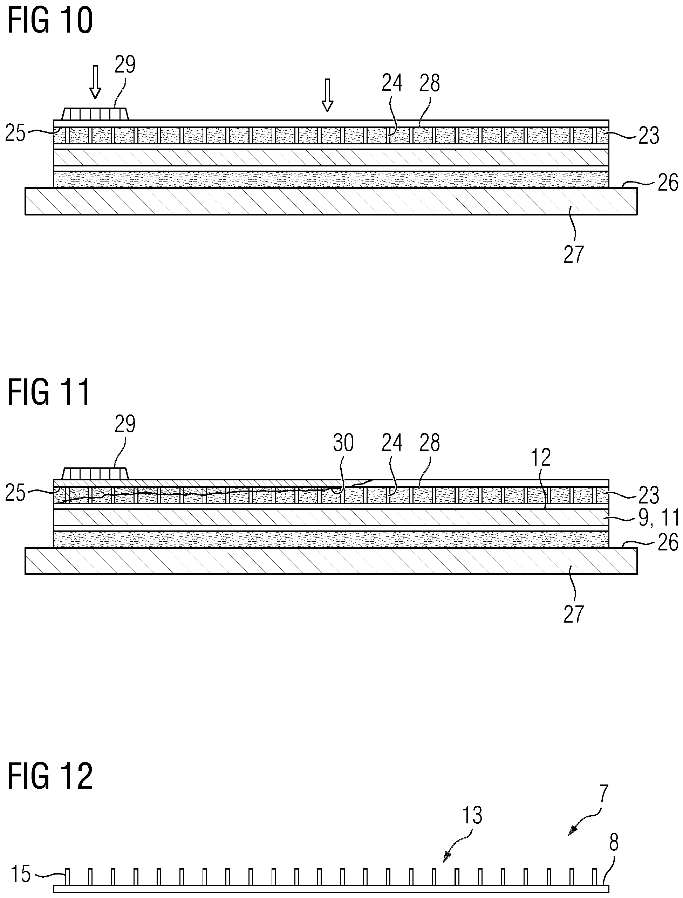

In fig. 10, a first process step of a method for manufacturing a rotor blade 4 for a wind turbine 1 is shown. The preform element 23 has been placed on the molding surface 26 of a blade mold 27. It is possible that the wind turbine rotor blade is manufactured from a plurality of preform elements 23, which are not shown for the sake of simplicity.

On the surface 25 of the preform element 23, at least one flow-enhancing layer 28 has been arranged. The flow-enhancing layer 28 enhances the flow in particular in a plane parallel to the plane of the molding surface 26, hence orthogonal to the thickness direction z. On a portion of the surface 25 of the preform element 23, hence on a portion of the flow-enhancing layer 28, an inlet 29 for providing the resin for the resin-infusion based casting process of the rotor blade 4 is arranged.

In fig. 11, the resin infusion into the preform element 23 is shown. The resin in provided through the inlet 29 and distributes in the preform element 13 by application of a pressure difference, for instance by applying a pressure at the inlet 29 and/or by applying a vacuum at least partly within the preform element 23.

The resin infuses the preform element 23, wherein the resin is first distributed on the surface 25 of the preform element 23 by the flow-enhancing structure 28. This allows for guiding the resin to the channels 24 in the preform element 23, which allow for an increased flow of the resin in the vertical z direction to reach in particular the flow channels 12 at the rigid core component 11 within a shorter time period. The distribution of the resin in the preform element 23 is shown schematically by a flow front 30.

In fig. 12, an embodiment of a mold 7 is shown. In this embodiment, the penetration arrangement 13 comprises a plurality of penetration elements 15 protruding from the molding surface 8 of the mold 7. The penetration elements 15 may have the same geometries and/or sizes as well as the same distributions as discussed in relation to figures 4 and 5.

In all embodiments, it is possible that the penetration elements 15 are coupled each to an individually controllable actuator which allows for adjusting the penetration length of the penetration element 15. This allows for adapting the penetration arrangement 13 to different thicknesses of textile components 10, in which channels 24 should be created. However, it is also possible to provide a plurality of differently shaped molds 7 with penetration arrangements 13 integrated in the molding surfaces 8 and/or differently shaped penetration arrangements 13 with base structures 14 so that they may be chosen in correspondence to the preform elements 23 to be fabricated.

Besides the heat activatable adhesive agent, also other sources for activating the adhesive agent, like ultrasonic activation and/or radio waves activation, may be used for partly softening and/or liquifying the adhesive in all embodiments.

Although the present invention has been described in detail with reference to the preferred embodiment, the present invention is not limited by the disclosed examples from which the skilled person is able to derive other variations without departing from the scope of the invention.

## Claims

1. Method for manufacturing a preform element (23) used in particular for manufacturing a rotor blade (4) of a wind turbine (1), comprising the steps of:
- Providing a mold (7) with a molding surface (8), one or more preform building components (9), an adhesive agent, and a penetration arrangement (13) comprising a plurality of elongated penetration elements (15) protruding from a base structure (14) and/or from the molding surface (8), wherein at least one of the preform building components (9) is a textile component (10) comprising a plurality of fibers,
- Arranging the preform building components (9) and the adhesive agent on the molding surface (8), wherein the textile component (10) and the adhesive agent are arranged at least sectionally in contact with each other, wherein the textile component (10) and/or the penetration arrangement (13) are arranged in such manner that the penetration elements (15) protrude into the textile component (10) locally spacing the fibers,
- Activating the adhesive agent for at least partly soften and/or liquefying the adhesive agent,
- Solidifying the activated adhesive agent, and
- Separating the penetration arrangement (13) and the preform components (9) for forming the preform element (23) comprising channels (24) protruding from an outer surface (25) of the preform element (23) into the textile component (10) at the positions of the penetration elements (15).

2. Method according to claim 1, **characterized in that** the penetration arrangement (13) comprises a plate-shaped base structure (14) from which the penetration elements (15) protrude, wherein the base structure (14) is arranged on top of the textile component (10) with the penetration elements (15) protruding into the textile component (10) and/or that the penetration arrangement (13) comprises a plurality of penetration elements (15) protruding from the molding surface (8), wherein the textile component (10) is arranged in direct contact with the molding surface (8).

3. Method according to claim 1 or 2, **characterized in that** penetration elements (15) comprising at least sectionally a circular, an elliptical, a triangular, a quadratic, a rectangular or a polygonal cross-sectional area are used.

4. Method according to one of the preceding claims, **characterized in that** penetration elements (15) with a protruding length between 2 mm and 15 mm, and/or a diameter between 0.5 mm and 2 mm are used and/or that at least partly retractable penetration elements (15) are used.

5. Method according to one of the preceding claims, **characterized in that** penetration elements (15) comprising a tapered tip-section (17) are used.

6. Method according to one of the preceding claims, **characterized in that** the penetration elements (15) are distributed evenly on the base structure (14) and/or on the molding surface (8), and/or that the base structure (14) and/or the molding surface (8) comprise at least two regions with different distributions and/or densities of penetration elements (15).

7. Method according to one of the preceding claims, **characterized in that** the arranged textile component (10) is at least partly compressed, wherein the penetration elements (15) extend completely within the compressed textile component (10).

8. Method according to one of the preceding claims, **characterized in that** an adhesive agent activatable by heat, radio waves and/or ultrasonic excitation is used.

9. Method according to one of the preceding claims, **characterized in that** a heating means is used for activation of the adhesive agent, wherein the heating means is arranged adjacently to the penetration arrangement (13).

10. Method for manufacturing a rotor blade (4) of a wind turbine (1) using one or more preform elements (23) manufactured according to one of the preceding claims.

11. Method according to claim 10, **characterized in that** the preform element (23) is arranged in a blade mold (27), wherein resin is infused into the preform element (23), wherein the resin is supplied to at least a portion of the at least one surface (25) comprising the channels (24) .

12. Method according to claim 11, **characterized in that** at least one flow-enhancing layer (28) is arranged on the at least one surface (25) comprising the channels (24), wherein the resin is supplied to a portion of the flow-enhancing layer (28).

13. Preform element for a wind turbine rotor blade (4) manufactured according to one of the claims 1 to 9.

14. Wind turbine rotor blade manufactured according to one of the claims 10 to 12.

15. Wind turbine comprising a wind turbine rotor blade (4) according to claim 14.

16. Mold for manufacturing a preform element (23) in particular for manufacturing a wind turbine rotor blade (4), wherein the mold (7) comprises a molding surface (8) and a penetration arrangement (13), wherein the penetration arrangement (13) comprises a plurality of elongated penetration elements (15) protruding from the molding surface (8).
